Europäisches Patentamt

European Patent Office

Office européen des brevets

(11) Publication number: **0 327 959 B1**

(12) EUROPEAN PATENT SPECIFICATION

(45) Date of publication of patent specification: **30.06.93**  (51) Int. Cl.⁵: **H01M 10/14**, H01M 2/18

(21) Application number: **89101789.9**

(22) Date of filing: **02.02.89**

(54) Process for the assembly of complete elements with continuous microporous separators for electric batteries.

(30) Priority: **08.02.88 IT 1934388**

(43) Date of publication of application:
**16.08.89 Bulletin  89/33**

(45) Publication of the grant of the patent:
**30.06.93 Bulletin  93/26**

(84) Designated Contracting States:
**DE FR GB**

(56) References cited:
**DE-A- 3 610 952**
**GB-A- 1 565 928**
**GB-A- 2 146 487**
**US-A- 4 479 300**

(73) Proprietor: **F.I.A.M.M. - FABBRICA ITALIANA ACCUMULATORI MOTOCARRI MONTECCHIO S.p.A.**
**Viale Europa, 63**
**I-36075 Montecchio Maggiore (Vicenza)(IT)**

(72) Inventor: **Magnaguagno, Angelo**
**Via GG. Trissino, 20**
**I-36075 Montecchio Maggiore (Vi)(IT)**
Inventor: **Chiarello, Lorenzo**
**Via G. Leopardi, 13**
**I-36073Spagnago di Cornedo Vicentino(Vi)(IT)**

(74) Representative: **Lecce, Giovanni**
**Dott. Giovanni Lecce & C. S.r.l. Via G. Negri 10**
**I-20123 Milano (IT)**

Rank Xerox (UK) Business Services
(3.10/3.6/3.3.1)

## Description

The present invention refers to a process for the assembly of lead-acid battery plate groups according to the preamble of claim 1.

More in particular, the present invention refers to a process for the assembly of complete elements with separators of microporous material obtained from a flat strip folded to create a sequence of parallel horizontal channels into which the plates of opposite polarity are inserted.

As known, the plates of electric batteries of opposite polarity must be electrically insulated, and, to obtain this electric insulation, it is indispensable to place a separator with diffused porosity between the plates, which maintains insulation for direct electronic conduction while allowing ionic conduction through the electrolyte.

It is therefore clear that very precise mechanical, electrical and positioning qualities are required of the separator according to the type of element, plate and use.

Without going into detail of the choice of the type of separator, it will be recalled that the separators may exist in leaf from or designed to create an envelope around the plates of same polarity especially for batteries for automotive use where the distance between the plates of opposite polarity is very much reduced.

In the case of batteries for deep cyclic and long life, porous separators have been introduced in particular of glass wool, which are wrapped around the positive pasted plates to prevent shedding of active material, or microporous plastic separators sleeving the negative plates to prevent short-circuit by leading through or mossing in batteries with tubular positive plates. However none of the above separators can be used when as in the case of the socalled oxygen-recombinant, valve-regulated lead-acid batteries it is necessary to retain the battery electrolyte within the separator and to control the electrolyte filling ratio in order to allow the diffusion of the oxygen generated from water during charging towards the negative plate where it is recombined to water.

A process for the assembly of lead-acid battery plate groups from a continuous flat strip separator according to the preamble of claim 1 is known from GB-A-2146487.

According to the disclosed process, the microporous separator material is always placed between plates of opposite polarity in double layer. This double layer minimizes the possibility of through-holes for even the finest particles of active material: one layer of separator being placed under the negative plate and the other under the positive plate.

According to the present invention, exact centering of the plates within the separator and perfect insertion of the stacked group inside the battery is achieved by the features in the characterizing part of claim 1.

Particular embodiments of the present invention are set forth in dependent claims 2 to 9.

Thanks to the process of the present invention, the plates are exactly positioned in the centre of the separator folds, solving the problem of centering the plates within the separator. The same process also guarantees a perfect insertion, which is something completely new, of the stacked group inside the battery case until a slight compression is obtained, so that the double layers wrapping the bottom of the plates form a sort of envelope also around the plate edges.

The present invention allows to accomplish all these advantages, starting from a flat microporous separator strip in roll form finishing with the element with centered plates, with double insulation between the plates, which are further wrapped with the separator on the bottom and on the sides. The object of the present invention, an assembly process of complete groups for a production line of elements for batteries, can be better understood from the following description, in which reference is made to the figures in the enclosed drawings which show a preferred, illustrative but not limiting description, and in which:

FIG. 1    shows the schematic plan view of the machine of the present invention;

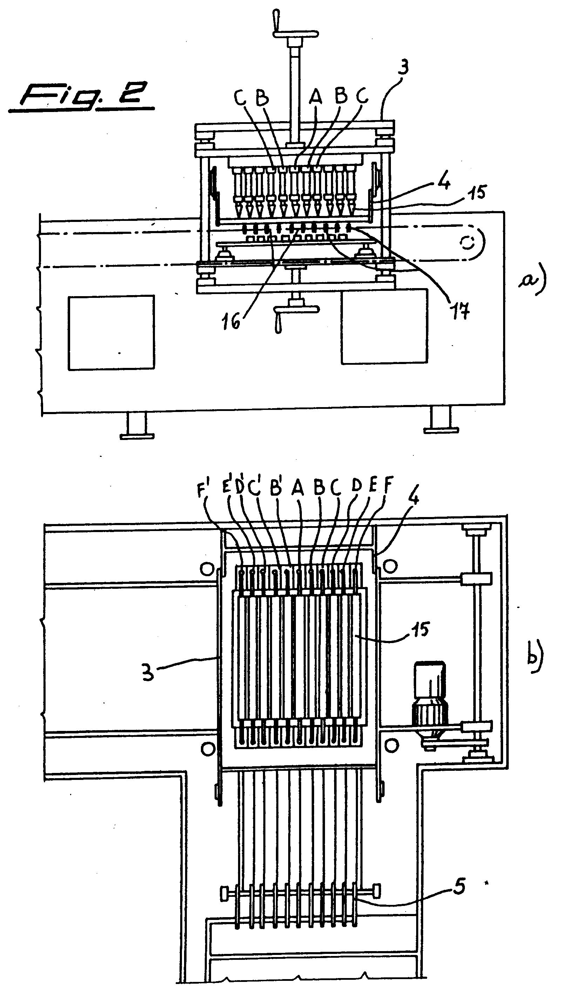

FIG. 2    shows the schematic elevation view a) and plan view b) of the separator folder;

FIG. 3    shows the schematic top view of the insertion station of the plates in the preformed channels which are still open;

FIG. 4    shows the schematic view of Section X-X of FIG. 3 in which the channels are filled with plates;

FIG. 5    shows the schematic top view of the chain conveying the separator and guiding the folds.

To carry out the process of the present invention, a continuous strip of microporous material of fixed width (e.g. 750 mm.) is used. Said continuous strip is available in rolls. The first phase is comprised of the automatic uncoiling of the roll 1, carried out with the help of the uncoiling rollers 13, until sheet 2 is obtained of length calculated from the formula $L = 2H(N_t-1)K$

where:

L =    length of the cut sheet

H =    nominal height of the separator fold

$N_t$ =    total number of plates forming the group

K = correction factor for the thickness of the plates.

The sheet, cut to length by knife 12, is conveyed forward by conveyor belt 14 and centered under folder 3 comprised of a series of parallel wedge-shaped bars 15.

Said bars 15, when lowered, produce the required folds along the separator sheet. For this folding operation, first the wedge controlled by the central cylinder (A) is lowered, pushing the sheet into the corresponding opening 16 existing between two adjoining bars 17 placed under the wedge, obtaining the first central fold on the sheet. Then the outer wedges controlled by the other cylinders (B) + (B′), (C) + (C′) etc. are lowered in sequence, until the required number of folds is obtained.

The height of each flat portion of separator between two consecutive folds is at least equal to that of the plate.

When the folds are complete and therefore the entire sheet previously cut to length is completely folded, the folded sheet is inserted on the conveying and guiding chain 5 for the folds by the pusher 4.

Said chain 5 is indexed forward with a pitch equal to at least three times the width of each group of plates forming the elements. The folded separator sheet is fed to the plate feeder units 6, which, in sequence, places the plates of different polarity between the folds of said separator sheet.

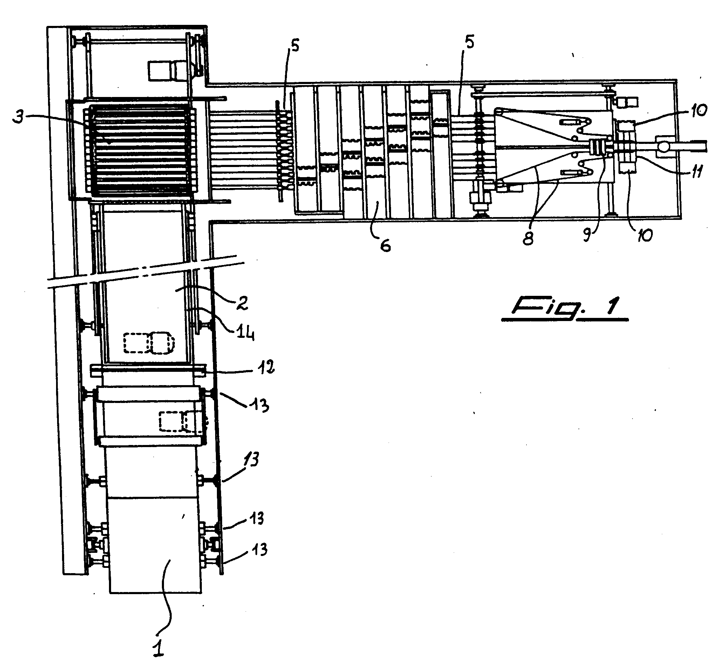

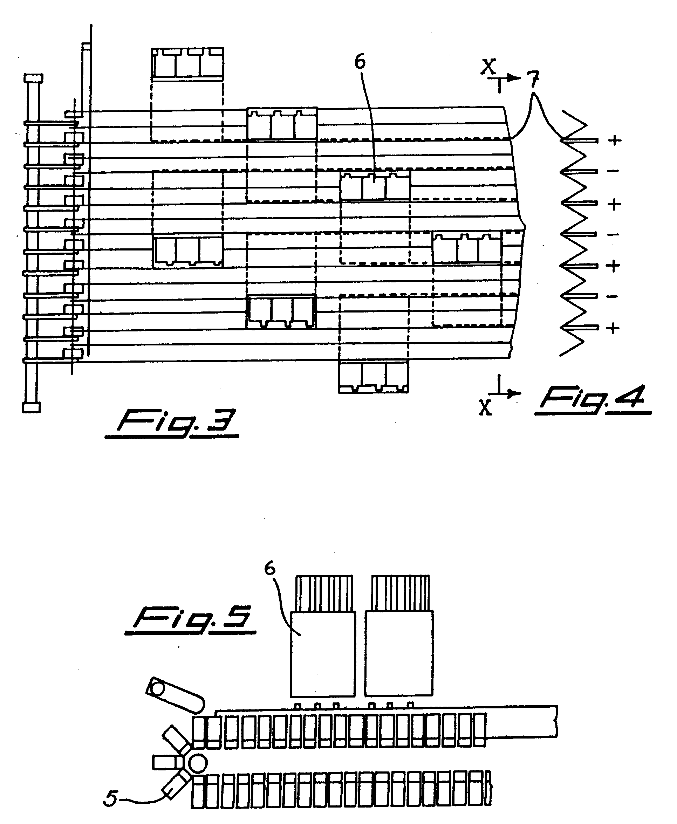

Said positive and negative plates are fed by an insertion system 6, composed of many single feeders in the sequence indicated in Figs 1 and 3 and placed, with respect to the separator channels, in staggered positions from the first to the last.

Each feeder contains three plates of the same polarity. From each single feeder it is possible to extract, with known devices, e.g. a pusher, three plates at the same time and insert them in the center of the channels with the open folds 7 facing upwards (Fig. 4). Said system makes it possible to insert plates of the same polarity in the same channel and simultaneously to insert all the negative and positive plates forming the element, except the two end negative plates which are inserted at the end, when the plate stack is already tightened and before cutting to separate the individual elements, with the result that plates of opposite polarity may be stacked in the required number (in figs. 3 and 4 for example 4(+) and 3(-). After inserting the plates in the separator channels, the folded separator sheet with inserted plates in channels is indexed forward with the above mentioned pitch.

Thus, through consecutive steps the plate groups are completed. Then, by means of known devices, e.g. rollers and belts 8, the groups of plates are brought closer, reducing the angle between the channels to approximately 10°.

The groups almost tightened pass under the station 9 where the plate lugs are aligned. In said station 9, the plate lugs are aligned by means of a known device, e.g. comb or parallel bars, which, acting on the plate lugs, align and space each group. Said alignment device causes the plate to align and to space at the correct distance two consecutive groups, making it possible to create the same interval between each set of groups.

Into each group thus formed, the end negative plates are aligned to the other plates, through the end feeders 10, opposite each other and containing three plates each like feeders 6.

The completed and tightened groups thus obtained can now be separated. This is made in the cutting station 11, in which, with known technique, a cutting device with n blades, for example 3, or laser, is inserted, with predetermined pitch, between (n + 1), for example 4, nearest groups exactly on their center line, creating cut sides of separators exactly parallel, complanate, of a predetermined width and making three individual finished elements.

Said finished elements are partially inserted in the battery cases or containers, to be welded with known techniques.

As the sides of the separators are parallel and compressible, they may be slightly forced against the case walls to create the side insulation.

When a folded sheet 2 has been moved through the machine, another sheet moves forward and so on until all the separator roll is used up. The cycle is then started again after insertion of a new roll.

The process has been illustrated with reference to the microporous glass separator, but it can also be used with flexible microporous plastic separator with flat or ribbed surface, like those used, for example, in conventional lead-acid batteries.

**Claims**

1. A process for the assembly of lead-acid battery plate groups with a double folded microporous glass or flexible plastic separator with flat or ribbed surface inserted between alternate positive and negative plates, comprising forming folds at regular intervals in a continuous microporous separator to permit folding thereof alternately in opposite directions, inserting positive and negative plates alternately between the folds of the separator and bringing closer the plates, characterized in that said process consist in:
cutting the continuous microporous separator into separate sheets (2); folding each sheet (2) into a plurality of folds forming parallel channels by pushing the sheet (2) into openings (16) of adjacent bars (17) by a plurality of parallel wedge-shaped bars (15), the height of each channel being at least equal to that of each plate;

simultaneously inserting within the openings of the channels all the negative and positive plates forming each battery group, except the two end negative plates, the negative and positive plates being alternately arranged and each being provided with a lug;

bringing closer the plates so that the opening of the channel takes up the form of the wedge and the angle of the opening is reduced to approximately 10°;

aligning the plate lugs of each group and spacing each group from the others;

inserting a negative plate to each end of each group, and

separating each completed and thightened battery plate group.

2. The process according to claim 1, characterized in that the microporous separator has a width proportional to that of the plates and it is cut into sheets (2) having the length (L):

$$L = 2H(Nt-1)K$$

wherein L is the lenghth of the sheet, H is the nominal height of the separator fold, Nt is the total number of plates forming each group and K is a correction factor for the thickness of the plates.

3. The process according to claim 1 or 2, characterized in that the parallel wedge-shaped bars (15) are moved by cylinders (A,B,B',C,C') and it is moved first the central wedge-shaped bar to form the central fold of the sheet (2) and then the side bars to form the side folds.

4. The process according to anyone of the preceding claims, characterized in that the positive and negative plates are separately inserted within the respective opening of the channels by different feeders.

5. The process according to anyone of the preceding claims, characterized in that the plate lugs are aligned by comb or parallel bars.

6. The process according to anyone of the preceding claims, characterized in that each completely and thightened plate group is separated from each other by a cutting device provided with n parallel blades which, inserted in (n + 1) subsequent groups, cut the separator edges of each single group.

7. The process according to anyone of the preceding claims from 1 to 5, characterized in that each completed and thightened plate group is separated from each other by a laser cutter operating in the center line between two consecutive plate groups.

8. The process according to anyone of the preceding claims, characterized in that each battery group comprises four positive plates and three negative plates, alternately arranged, and two end negative plates.

9. The process according to anyone of the preceding claims, characterized in that each sheet comprises four battery plate groups and each battery group is separated from each other by a cutting device having three parallel blades or laser rays.-

**Patentansprüche**

1. Verfahren für den Zusammenbau von Plattengruppen einer Säurebatterie mit einem doppelt gefalteten mikroporösen Glasseperator oder einem flexiblen Kunststoffseperator, mit einer flachen oder gerippten Oberfläche, der zwischen abwechselnd positiven und negativen Platten eingesetzt wird, umfassend das Ausbilden von Faltungen in gleichmäßigen Abständen an einem kontinuierlichen mikroporösen Seperator, um das Falten von diesem abwechselnd in entgegengesetzte Richtungen zu ermöglichen, das Einsetzen positiver und negativer Platten abwechselnd zwischen die Faltungen des Seperators und das Näherzusammenbringen der Platten,

**dadurch gekennzeichnet,**

daß das Verfahren umfaßt:

Schneiden des kontinuierlichen mikroporösen Seperators in getrennte Bahnen (2),

Falten jeder Bahn (2) in eine Anzahl von Faltungen, die parallele Kanäle bilden, durch Eindrücken der Bahn (2) in Öffnungen (16) von benachbarten Stangen (17) durch eine Anzahl von parallelen, keilförmigen Stangen (15), wobei die Höhe jedes Kanals wenigstens gleich der jeder Platte ist, gleichzeitiges Einsetzen aller negativer und positiver Platten, welche jede Batteriegruppe bilden, in die Öffnungen der Kanäle, mit Ausnahme der zwei negativen Endplatten, wobei die negativen und positiven Platten abwechselnd angeordnet werden und jede mit einem Ansatz versehen ist,

Näheraneinanderbringen der Platten, so daß die Öffnung der Kanäle die Form eines Keils annimmt und der Öffnungswinkel auf annähernd 10° reduziert wird,
Ausrichten der Plattenansätze jeder Gruppe und Inabstandbringen jeder Gruppe von den anderen,
Einsetzen einer negativen Platte an jedem Ende jeder Gruppe, und
Trennen jeder vollständigen und fest zusammengedrückten Batterieplattengruppe.

2. Verfahren nach Anspruch 1, dadurch gekennzeichnet, daß der mikroporöse Seperator eine Breite proportional der der Platten hat und in Bahnen (2) geschnitten ist, deren Länge (L):

L = 2H(Nt-1)K

beträgt, worin L die Länge der Bahn, H die Nennhöhe der Seperatorfaltung, Nt die Gesamtzahl der jede Gruppe bildenden Platten und K ein Korrekturfaktor für die Dicke der Platten ist.

3. Verfahren nach Anspruch 1 oder 2, dadurch gekennzeichnet, daß die parallelen, keilförmigen Stangen (15) durch Zylinder (A, B, B', C, C') bewegt werden und zunächst die mittige, keilförmige Stange bewegt wird, um die mittige Faltung der Bahn (2) auszubilden, worauf die Seitenstangen bewegt werden, um die Seitenfaltungen auszubilden.

4. Verfahren nach einem der vorhergehenden Ansprüche, dadurch gekennzeichnet, daß die positiven und negativen Platten getrennt in die entsprechenden Öffnungen der Kanäle durch unterschiedliche Zuführeinrichtungen eingesetzt werden.

5. Verfahren nach einem der vorhergehenden Ansprüche, dadurch gekennzeichnet, daß die Plattenansätze durch einen Kamm oder parallele Stangen ausgerichtet werden.

6. Verfahren nach einem der vorhergehenden Ansprüche, dadurch gekennzeichnet, daß jede vollständige und fest zusammengedrückte Plattengruppe von jeder anderen durch eine Schneidvorrichtung getrennt wird, die mit n parallelen Schneiden versehen ist, die, eingesetzt in (n+1) aufeinanderfolgende Gruppen, die Seperatorränder jeder einzelnen Gruppe schneiden.

7. Verfahren nach einem der vorhergehenden Ansprüche 1-5, dadurch gekennzeichnet, daß jede vollständige und festzusammengedrückte Plattengruppe von jeder anderen durch eine Laserschneidvorrichtung getrennt wird, die auf der Mittellinie zwischen zwei aufeinanderfolgenden Plattengruppen arbeitet.

8. Verfahren nach einem der vorhergehenden Ansprüche, dadurch gekennzeichnet, daß jede Batteriegruppe vier positive Platten und drei negative Platten umfaßt, die abwechselnd angeordnet sind, sowie zwei negative Endplatten.

9. Verfahren nach einem der vorhergehenden Ansprüche, dadurch gekennzeichnet, daß jede Bahn vier Batterleplattengruppen umfaßt und jede Batteriegruppe von jeder anderen durch eine Schneidvorrichtung getrennt wird, die drei parallele Schneiden oder Laserstrahlen aufweist.

**Revendications**

1. Procédé pour l'assemblage de faisceaux de plaques d'accumulateurs au plomb avec un séparateur microporeux plié en deux, en verre ou en matière plastique souple, une surface plane ou rainurée étant intercalée entre les plaques positives et négatives alternées, comportant la formation de plis à intervalles réguliers dans un séparateur microporeux continu pour permettre de plier celui-ci alternativement dans des directions opposées, l'intercalation de plaques alternativement positives et négatives entre les plis du séparateur et le rapprochement mutuel des plaques,
caractérisé en ce que ledit procédé consiste à :
   - découper le séparateur microporeux continu en feuilles séparées (2) ;
   - plier chaque feuille (2) en plusieurs plis en formant des rainures parallèles en poussant la feuille (2) dans des ouvertures (16) de barres adjacentes (17) à l'aide d'une pluralité de barres parallèles cunéiformes (15), la hauteur de chaque rainure étant au moins égale à celle de chaque plaque ;
   - insérer simultanément dans les ouvertures des rainures toutes les plaques positives et négatives formant chaque faisceau de l'accumulateur, sauf les deux plaques négatives d'extrémité, les plaques négatives et positives étant disposées en alternance et chacune étant pourvue d'un crochet ;
   - rapprocher les plaques les unes des autres de façon que l'ouverture de la rainure épouse la forme du coin et que l'angle de l'ouverture soit réduit à environ 10° ;

- aligner les crochets de plaques de chaque faisceau et espacer chaque faisceau des autres;
- introduire une plaque négative à chaque extrémité de chaque faisceau ; et
- séparer chaque faisceau de plaques d'accumulateur terminé et serré.

2. Procédé selon la revendication 1,
   caractérisé en ce que le séparateur microporeux a une largeur proportionnelle à celle des plaques et est découpé en feuilles (2) ayant une longeur (L) :

   $$L = 2H(Nt-1)K,$$

   où L est la longueur de la feuille, H est la hauteur nominale du pli du séparateur, Nt est le nombre total de plaques formant chaque faisceau et K est un facteur de correction de l'épaisseur des plaques.

3. Procédé selon la revendication 1 ou 2,
   caractérisé en ce que les barres parallèles cunéiformes (15) sont actionnées par des vérins (A, B, B', C, C'), la barre cunéiforme centrale étant actionnée la première pour former le pli central de la feuille (2), puis les barres latérales pour former les plis latéraux.

4. Procédé selon l'une quelconque des revendications précédentes,
   caractérisé en ce que les plaques positives et négatives sont insérées séparément, par des organes d'entraînement différents, dans les ouvertures des rainures.

5. Procédé selon l'une quelconque des revendications précédentes,
   caractérisé en ce que les crochets des plaques sont alignés par un peigne ou par des barres parallèles.

6. Procédé selon l'une quelconque des revendications précédentes,
   caractérisé en ce que chaque faisceau de plaques terminé et serré est séparé des autres par un dispositif de coupe muni de n lames parallèles qui, introduites dans (n + 1) faisceaux successifs, découpent les bords séparateurs de chaque faisceau individuel.

7. Procédé selon l'une quelconque des revendications 1 à 5,
   caractérisé en ce que chaque faisceau de plaques terminé et serré est séparé des autres par un moyen de coupe à laser agissant sur la ligne centrale entre deux faisceaux de plaques consécutifs.

8. Procédé selon l'une quelconque des revendications précédentes,
   caractérisé en ce que chaque faisceau d'accumulateur comprend quatre plaques positives et trois plaques négatives, disposées en alternance, et deux plaques négatives d'extrémité.

9. Procédé selon l'une quelconque des revendications précédentes,
   caractérisé en ce que chaque feuille comporte quatre faisceaux de plaques et chaque faisceau d'accumulateur est séparé des autres par un dispositif de coupe ayant trois lames ou rayons laser parallèles.

Fig. 1

Fig. 2

a)

b)

Fig.3

Fig.4

Fig.5